# EUROPEAN PATENT APPLICATION

(11) **EP 4 792 656 A1**
(43) Date of publication of application: **19.08.2026**
(21) Application number: 23955024.7
(22) Date of filing: 11.10.2023
(51) Int. Cl.: A23F 5/02, A23F 5/44, A23L 2/38, A23L 2/52, A23L 2/80, C12G 3/04

(54) **METHOD FOR OBTAINING READY-TO-DRINK BEVERAGE-TYPE FOOD COMPOSITION BASED ON ACAI SEEDS AND READY-TO-DRINK BEVERAGE-TYPE FOOD COMPOSITION BASED ON ACAI SEEDS**

(71) Applicant: Açaitea Holding Ltda, São Carlos - SP 13563-691 (BR)
(72) Inventor: VERGANI, Renato José, 14025-530 Ribeirão Preto - SP (BR); MATTOS JUNIOR, Valter, 13560-000 São Carlos - SP (BR)
(74) Representative: Patentree
(86) International application number: PCT/BR2023/050350
(87) International publication number: WO 2025/076600

(57) **Abstract**

The present invention relates to a ready-to-drink beverage-type food composition obtained by infusing the powder obtained from the acai seeds in water, and adding syrups or natural extracts and sweetening agents. For obtaining the powder, the acai seeds are previously processed and undergo a step of neutralization of the tannins present in the seed, which occurs both by means of windrow fermentation and by ethylene inactivation by soaking in a hydroalcoholic solution, therefore, without the use of chemical components, and, thereafter, roasted in a Moderately Dark roast, according to the classification of the Recommended Quality Standard and Good Manufacturing Practices for Roasted Coffee Beans and Roasted and Ground Coffee - ABIC. The ready-to-drink tea provided is a healthy beverage, rich in antioxidants, nutrients and fibers, representing a sustainable alternative for the use of acai seed.

## Description

### SUMMARY

The present patent application for an invention refers to a "**PROCESS FOR OBTAINING A READY-TO-DRINK BEVERAGE-TYPE FOOD COMPOSITION BASED ON ACAI SEEDS AND READY-TO-DRINK BEVERAGE-TYPE FOOD COMPOSITION BASED ON ACAI SEEDS**", which relates to the obtaining of a ready-to-drink beverage-type composition, obtained by infusing in water the powder obtained from the acai seeds, previously processed and roasted, in a Dark roast, according to the classification of the Recommended Quality Standard and Good Manufacturing Practices for Roasted Coffee Beans and Roasted and Ground Coffee - Brazilian Coffee Industry Association (ABIC), and adding syrups or natural extracts and sweetening agents.

### FIELD OF APPLICATION

The present invention belongs to the section of human needs, to the field of food products, more specifically to the field of teas and their preparations; as it refers to a ready-to-drink beverage-type food composition, obtained from the infusion in water of powder obtained from the acai seed, previously processed and roasted, and adding syrups or natural extracts and sweetening agents.

### PERSUASION

Acai, as well as products derived therefrom, has become increasingly popular. This Brazilian fruit appeals to consumers for its versatility, flavor, and various properties, such as: it aids in combating aging; it has the ability to assist in reducing the risks of cancer; it has high concentration of antioxidants, with emphasis on anthocyanins, responsible for the purplish color; it provides improvement in intestinal transit, contributing to weight loss; it assists in the control of cholesterol and blood pressure, due to its high content of fibers and substances that help to prevent atherosclerosis, the hardening of the vessels, controlling high blood pressure and improving blood circulation; it provides energy, assists in muscle recovery, in energy replenishment, gain of lean mass and increase of satiety; it assists in strengthening the immune system, acai contains a substance called arabinogalactan, which stimulates the action of the defense cells of the body; it has the ability to assist in the harmful action of free radicals and in the prevention of degenerative diseases, due to the action of its antioxidants, which combat oxidative stress produced by free radicals and reduce the accumulation of beta-amyloid protein; and, due to its high concentration of calcium and potassium, it promotes bone health.

The increased consumption of acai demands increased production, which favors the generation of a large quantity of waste, mainly composed of seeds. Daily acai production generates approximately 300 tons of organic waste (Rogez, 2000: Acai: preparation, composition and improvement of conservation). However, the possibility of extracting high-value-added compounds from acai seeds has proven to be a very interesting technological alternative for using this waste (Melo de Freitas, 2010: Extraction of polysaccharides from acai seeds (*Euterpe oleracea*)). Among the compounds present in the acai seed, the literature highlights the presence of galactomannan, inulin, and polyphenols (Menezes Neto, 2004: Anatomical characterization and degradation of reserves in seeds and seedlings of acai palm (Euterpe oleracea Mart.) during anaerobiosis; Paula, 1975: Anatomy of Euterpe oleracea Mart. (Palmae da Amazônia); Rodrigues et al., 2006: Total Oxidant Scavenging Capacity of Euterpe oleracea Mart. (Acai) Seeds and Identification of Their Polyphenolic Compounds).

The acai seed constitutes about 83% of the fruit, being formed by a small solid endosperm linked to a pigment that, at maturity, is rich in organic material, carbon, cellulose, hemicellulose, inulin crystals, and lipids (Maia, 2020: Chemical Composition and Nutritional Benefits of Acai Seeds (Euterpe precatoria), Guarana (*Paullinia cupana*) and tucumã (*Astrocaryum aculeatum*) in animal feed.). Featuring a fibrous epicarp, rich in silica, and a slightly woody endocarp (EMBRAPA, 2006: Acai Production Systems).

Paula (1975), when analyzing the anatomy of the pericarp, identified the presence of inulin crystals in the acai seed, found mainly in the young endosperm. Inulin is a polysaccharide of the fructan type and it has applications in food industry, such as use as fat substitute and as a natural sweetener. Inulin and oligofructose are considered dietary fibers because they are resistant to digestion in the upper gastrointestinal tract, reach the large intestine intact, and are fermented by bifidobacteria present in the colon (Roberfroid, 1999: Caloric value of inulin and oligofructose).

Costa et al., (2011: Physicochemical characterization of the roasted acai seed (Euterpe oleracea Mart.) intended for the production of a hot beverage), assert that based on the quantified values of polyphenols, it can be stated that the beverage made from the roasted seed may present benefits, as it has antioxidant activity associated with bioactive compounds.

Aiming to provide an alternative use for acai seeds, an abundant industrial waste product with interesting properties for the food industry, the inventors developed a ready-to-drink beverage, a tea made from acai seeds, obtained by infusing powder from previously processed and roasted acai seeds in water, and adding syrups or natural extracts and sweetening agents, which is a refreshing beverage rich in antioxidants and fiber. The process of obtaining the drink is also innovative, since it begins with the processing of the acai seed, which includes a step of neutralizing the tannins present in the seed, without the use of chemical additives, whose action gives the drink an undesirable astringency. Therefore, the drink offered, in addition to providing refreshment, antioxidants and fiber, also has a pleasant taste.

### BACKGROUND OF THE INVENTION

Currently, there are several known applications for acai seeds, an abundant raw material that was, for a long time, considered only an industrial waste product. The use of this component in the field of civil construction is extensive, as observed in several studies, such as "Use of mesocarp and seed fiber of acai as a component of sand - asphalt mixtures for paving in the city of Manaus/AM" (Santos Silva et al., 2016) and "Characterization of acai particles aiming at their potential use in civil construction" (Barbosa et al., 2019)*.* More recently, the acai seed has been considered for the production of bioenergy and biomaterials, as observed in the research "Potential of acai residue in the production of bioenergy and sustainable nanostructured materials", led and coordinated by Professor Lina Bufalino, from the Amazon Federal Rural University, and in studies such as "Production of energy briquettes from acai seeds" (Reis et al., 2002), "Use of acai seeds as a source of thermal energy for brickworks in the municipality of Bragança, Pará" (Cordeiro et al., 2017), "Acai seed: a bioenergy alternative" (Silva, 2021) and "Use of acai seed fibers as a dispersed phase in thermoplastic matrix composites: a literature review" (Silva et al., 2022).

In addition to the applications previously mentioned, the acai seed also has the potential to be used in agriculture, as described in the study "Fresh crushed acai seed in the formulation of substrate for the production of brassica vegetable seedlings" (Elacher et al., 2014), and in livestock, as observed in "Acai seed meal in feed for slow-growing chickens" (Arruda et al., 2018), also being used by the cosmetic industry, as described in "Processing of acai seeds (Euterpe oleracea Mart.) for the extraction of inulin" (Lima, 2015), and by the food industry, as observed in "Chemical composition and nutritional benefits of acai seeds (Euterpe precatoria), guarana (Paullinia cupana) and tucumã (Astrocaryum aculeatum) in animal feed" (Maia, 2020) and "Extraction of polysaccharides from acai seed (Euterpe oleracea)" (Freitas, 2011).

The prior art document BR102021018902A2, entitled "Method for transforming acai seed into coffee powder through roasting of the seed from the inside out", describes a process for obtaining coffee powder through the reuse of acai seeds. For this purpose, the process is carried out in a system consisting of stainless steel cylinders, electrical resistance, a peeler machine, a gas oven and a grain grinder; and comprises the following steps: collection of the seeds; cleaning: in an aluminum sheet cylinder positioned diagonally whose bottom is fully perforated to drain water and residues, provided with blades in its interior to perform the cleaning; drying: after cleaning, the seeds proceed to a stainless steel cylinder, similar to the previous one, for drying, with an initial temperature of 30°C; peeling: subsequently, the seeds are taken to a peeling machine, to remove excess membranes, fibers from the acai seeds and residues; roasting: after being washed, dried and peeled, the seeds are taken to a stainless steel gas oven for roasting, in a stainless steel cylinder similar to that of washing; said cylinder having larger openings in the sieve; the roasting being carried out with hot air and the oven being heated with an initial temperature of 200°C; the seed being roasted evenly and uniformly, from the inside out; thereafter, the seeds are discharged into an open cooler, with a steel brush and a sieve below; degassing: the roasted seed rests in a stainless steel tank, with a lid, for a period of twenty-four hours for degassing; grinding: after the resting time is completed, the entire amount is ground, six consecutive times in a grain grinder, and becomes ready for consumption.

The prior art document BR102021016679A2, entitled "Soluble powder derived from acai seed", refers to a soluble powder of the instant coffee type, obtained from acai seed, by means of a process that comprises: collection and selection of the seeds *in natura*; drying in the sun, for a period equal to or greater than 10 hours; peeling, where granules and natural films of the seed are removed, for this method, flame from a torch-type burner is used, with rapid passage over the seeds and steel sieves with manual friction material; sanitization, by means of washing with a portion of water and sodium hypochlorite at 40%; alkalinization, where the seeds are soaked for 4 hours in water with pH 15; second drying, where the seed returns to sun exposure for a shorter period for rinsing; roasting, over constant butane flame for approximately 3 hours or until the ideal roast is reached; and grinding, with suitable granulometry.

Although the two latter prior art documents describe a process for obtaining acai seed powder, they do not describe the essential step of neutralizing the tannins present in the seed, which impart astringency to the powder obtained therefrom and, consequently, to the beverage produced therewith. More specifically, the present invention innovates by performing a tannin neutralization step, which occurs by windrow fermentation, or by ethylene inactivation by soaking in a hydroalcoholic solution, which is not observed in the prior art documents, which also do not suggest obtaining a ready-to-drink beverage obtained by infusing the powder obtained from the acai seeds in water, and adding syrups or natural extracts and sweetening agents.

Costa et al. (2011), in their work entitled "Physicochemical characterization of roasted acai seed (Euterpe oleracea Mart.) intended for the production of a hot beverage", aimed to physicochemically characterize acai seeds used for the production of a hot beverage and to reduce the tannin concentration by thermal treatment of the acai seed. For this purpose, the process applied to the seeds consisted of drying the raw material to facilitate the removal of the fibrous tissue, thermal treatment, roasting, grinding and granulometry. One of the problems solved by the present invention, in addition to providing an alternative to industrial waste through the provision of a new ready-to-drink beverage obtained by infusing the powder of previously processed acai seed, lies in the neutralization of the tannins present in the seed. Costa *et al.* achieved this effect through roasting of the seeds; however, this approach imparts bitterness and deteriorates bioactive components present in the raw material. In this sense, the present invention employs seed pre-treatment techniques prior to roasting, both by means of windrow fermentation and by ethylene inactivation by soaking in a hydroalcoholic solution, which is not suggested said paper or in any other prior art document identified

The prior art document BR0305223A, entitled "Method of use of acai seed (*Euterpe oleracea*) for the production of a hot beverage and the process for obtaining the same", refers to a process for transforming acai seed into powder and its use for the preparation of a hot beverage obtained by infusion, with aroma and flavor similar to traditional coffee, presenting as a distinguishing feature the total absence of caffeine, a substance present in large amounts in the composition of coffee. The document does not provide sufficient information about the process for obtaining acai seed powder and does not suggest obtaining a ready-to-drink beverage obtained by infusing the powder obtained from the acai seeds in water, and adding syrups or natural extracts and sweetening agents, therefore, it does not anticipate the present invention.

The prior art document BR102018016106A2, entitled "Soluble extract of roasted and ground acai seed (*Euterpe oleracea Mart.*) and its process of obtaining", refers to the soluble extract of acai seed, made available in liquid, powder or granular forms, and to its process of obtaining, which comprises: (1^{st}) Reception, cleaning and drying of the acai seeds in a rotary dryer with forced hot air for 6 to 30 hours, at temperatures between 105 and 230°C, obtaining at the end of the process a product with moisture between 4 and 12% or in a coffee hulling-type machine or other similar equipment for removal of felts and silicate, and submission to static drying on trays of an oven with hot air circulation at temperatures ranging from 60 to 150°C for 6 to 30 hours, obtaining at the end of the process a product with moisture between 4 and 12%; (2^{nd}) Roasting and Cooling of the acai seed in a rotary dryer with forced circulation of hot air at a temperature of 40 to 250°C, in three distinct phases - 1^{st} phase: with temperatures ranging between 40 and 180°C and corresponding to 80% of the total roasting time of the seeds, promoting the loss of 70 to 85% of the seed water; 2^{nd} phase: all free and bound water is evaporated and the temperature of the acai seeds is raised to the temperature of the beginning of pyrolysis, between 105 and 180°C; 3^{rd} phase: the acai seeds undergo pyrolysis, which is the roasting itself, under agitation in the roaster between 30 and 500 rpm at temperatures ranging between 160 and 250°C; (3^{rd}) Grinding of the acai seeds in an adjustable mill to produce a finer or coarser product, depending on the desired extract yield; (4^{th}) Extraction in solid-liquid extraction plants of the batch type, with two to eight columns or percolators and water preheater; vacuum, steam, cold or hot water and compressed air are also applied to the system through stainless steel pipes in each of the percolators, which in turn are provided with thermal insulation; the extraction of soluble solids occurs at an extractor inlet temperature ranging between 125 and 250°C, which is maintained at a pressure of 8 to 22 bars to prevent boiling, which would result in reduced extraction yield and loss of quality and aroma; under these conditions, the extract yield from extraction may be 12 to 25%; (5^{th}) Concentration to be carried out in two stages, ensuring better retention of aromatic and volatile substances, wherein, in the first stage, aroma recovery occurs in a single-effect evaporator by removal of volatile compounds, which are subsequently condensed so that they can be reincorporated into the de-aromatized acai extract after concentration; in the second stage, evaporation occurs in falling film or multiple-effect plate evaporators; this process uses temperatures between 40 and 80°C, in this second phase of the concentration process, the acai extract has percentages of solid substances between 12 and 25%, reaching at the end around 30 to 55% solids; (6^{th}) Evaporation or Drying carried out in a hot or cold system, wherein in the hot process drying occurs by atomization in a Spray Drying system where the concentrated acai extract (30 to 55% soluble solids) is diluted with an appropriate amount of soluble extract obtained in the extraction stage and consisting of 12 to 25% soluble solid substances, so that it reaches a concentration between 30 and 35% solid substances; in the cold process drying occurs by sublimation through freeze drying in three distinct phases comprising crystallization, granulation and drying at temperatures between -20°C and -80°C. The prior art document does not describe any step of neutralization of tannins present in the acai seeds prior to roasting, which in the present invention occurs both by means of windrow fermentation and by ethylene inactivation by soaking in a hydroalcoholic solution. In addition, it does not suggest obtaining a ready-to-drink beverage obtained by infusing the powder obtained from the acai seeds in water, and adding syrups or natural extracts and sweetening agents, therefore, it does not anticipate the present invention.

The prior art document BRPI1106645A2, entitled "Food compound based on acai seed and the process for obtaining the same", refers to a food compound, of the flour type, as well as to its process of obtaining. For this purpose, the document describes that the acai seeds are selected, sanitized, then the seeds are sent for drying in an oven at a temperature of 50 degrees, then the process of separating the seed from the fiber is carried out; thereafter, a new selection of the seeds is carried out, and a second drying, following the same parameters as the first, then the seeds undergo a grinding step, in a hammer mill with a screen having holes of 0.5 diameter, the food compound being intended for use in the manufacture of biscuits, breads, cakes, pizza dough and pasta. The prior art document further describes that, with the burning of the kernel and a straining process with boiling water, a beverage similar to coffee may be obtained. Given that the document does not provide sufficient information about the process for obtaining acai seed powder for obtaining the coffee-like beverage, and that it does not suggest obtaining a ready-to-drink beverage obtained by infusing the powder obtained from the acai seeds in water, and adding syrups or natural extracts and sweetening agents, it does not anticipate the present invention.

In view of the prior art documents identified, it is noted that none of them anticipates the present invention, since they do not describe a composition of the ready-to-drink beverage type, obtained by infusing the powder obtained from the acai seeds in water, previously processed so as to neutralize the tannins present in the seed, without the use of chemical components, and roasted in a Dark roast, according to the classification of the Recommended Quality Standard and Good Manufacturing Practices for Roasted Coffee Beans and Roasted and Ground Coffee - ABIC.

### OBJECT OF THE INVENTION

The present invention has as its object the provision of a ready-to-drink beverage rich in antioxidants, nutrients and fibers, obtained by infusing the powder obtained from the acai seeds in water, and adding syrups or natural extracts and sweetening agents.

### AS FOR THE INVENTION

The present invention refers to a ready-to-drink beverage-type composition, obtained by infusing the powder obtained from the acai seeds in water, and adding syrups or natural extracts and sweetening agents. For obtaining the powder, the acai seeds are previously processed and undergo a step of neutralization of the tannins present in the seed, which occurs both by means of windrow fermentation and by ethylene inactivation by soaking in a hydroalcoholic solution, therefore, without the use of chemical components, and, thereafter, roasted in a Dark roast, according to the classification of the Recommended Quality Standard and Good Manufacturing Practices for Roasted Coffee Beans and Roasted and Ground Coffee - ABIC. The ready-to-drink tea provided is a healthy beverage, rich in antioxidants, nutrients and fibers, representing a sustainable alternative for the use of acai seed.

### ADVANTAGES OF THE INVENTION

The present invention presents as main advantages:
✔ Providing a ready-to-drink beverage-type composition based on acai seed, which represents the transformation of an environmental liability into a high-value asset;
✔ Providing a ready-to-drink beverage-type composition based on acai seed, and adding syrups or natural extracts and sweetening agents, rich in antioxidants and fibers, with low caloric value;
✔ Providing a ready-to-drink beverage-type composition based on acai seed with low astringency, which is achieved due to the step of neutralization of the tannins present in the seeds without the use of chemical components or excessively high temperatures, which would impart bitterness to the product, in addition to compromising the nutrients present therein;
✔ Providing a process for obtaining a ready-to-drink beverage-type composition based on acai seed, wherein the neutralization of tannins occurs by natural fermentation or soaking in a hydroalcoholic solution, therefore free of chemical components added to the product.

### DETAILED DESCRIPTION OF THE INVENTION

The process for obtaining the ready-to-drink beverage-type food composition based on acai seed begins with the collection of the acai seeds immediately after extraction of the pulp. The seed is a by-product of the acai pulp extraction process; after the fruit undergoes the pulp extraction process, the main product, acai pulp, and a by-product, the seed, are obtained. After collection, the seeds are washed in running water to remove pulp residues. Then, the step of neutralization of the tannins present in the seed is carried out; for this purpose, the seeds may be subjected to windrow fermentation, with approximate dimensions of 60×30 cm, wrapped in plastic tarp, for a period of 48 to 96 hours; or by soaking the seeds in a hydroalcoholic solution (1 liter of 96 GL alcohol to 100 liters of water), for a period of 120 to 196 hours. The neutralization step, whether by natural fermentation or by soaking in a hydroalcoholic solution, is essential so that the ready-to-drink beverage presents less astringency, an undesired sensation.

After neutralization, the seeds are dried in open air and under sunlight for five days; after this period, the seeds are defibrillated, in specific defibration machinery, to remove the external fibers of the seed (hairs) and, thereafter, are subjected to "dark" roasting and categorized as "moderately dark" (Table 1), according to the Recommended Quality Standard and Good Manufacturing Practices for Roasted Coffee Beans and Roasted and Ground Coffee - ABIC, for a period of 18 to 48 minutes and temperatures of 150 to 320°C, thus obtaining a homogeneous product.

**Table 1: Roast Profile (ABIC). Classification determined using the Agtron /**

| Roast Profile | Agtron Classification Color Disk | Classification |
|---|---|---|
| No recommended | 25 | Very Dark |
| | 35 | Dark |
| Dark | 45 | Moderately Dark |
| Medium | 55 | Medium |
| | 65 | Medium Light |
| Light | 75 | Moderately Light |
| No recommended | 85 | Light |
| | 95 | Very Light |

### Roast Classification Color Disk system or by a similar electronic color detection instrument, colorimeter, that gives an equivalent result.

After roasting, the coffee is ground to obtain a powder with medium particle size, in accordance with Recommended Quality Standard and Good Manufacturing Practices for Roasted Coffee Beans and Roasted and Ground Coffee - ABIC (Table 2).

**Table 2: Grinding. Classification based on the percentage of retention on granulometric sieves Nos. 12, 16, 20, 30 and bottom, in specific equipment with agitation for 10 minutes and rheostat in position 5 or similar.**

| Grinding | Percentage of Retention | | | Tolerance for the percentage passing through sieve 30 | |
|---|---|---|---|---|---|
| | Sieves 12 and 16 | Sieves 20 and 30 | Bottom | Minimum | Maximum |
| Thick | 33% | 55% | 12% | 09% | 15% |
| Average | 07% | 73% | 20% | 16% | 24% |
| Fine | 00% | 70% | 30% | 25% | 40% |

After obtaining the acai seed powder, whose properties are shown in Table 3, an infusion in water at 90°C is prepared, in a service tank, with a concentration of 0.5 to 6% w/w, to which the syrup or natural extract is added, in a proportion of 0.4 to 0.8% w/w of the total volume of the composition. Thereafter, mechanical homogenization of the mixture is carried out and filtration is performed, for retention of larger particles as well as any contaminating microorganisms that may be present; for this purpose, equipment having three stages with porosity levels of 5.0 microns (for larger particles - first stage), 1.0 micron (for smaller particles - second stage) and 0.45 microns (for removal of microorganisms - third stage) is employed, with a flow rate of 500 to 4000 liters per hour.

After filtration, clarification is carried out, both for cleaning and for physical stability of the product. For this purpose, in a service tank, clarification is performed by adsorption, using clarifying agents such as silica gel, tannic acids and PVPP (polyvinylpolypyrrolidone), for a period of 24 to 96 hours. After the clarification step, the sweetening agent, in a proportion of 0.02 to 6% w/w of the total volume of the composition, is added to the mixture, which is again homogenized, before being pasteurized, in LTLT-type pasteurization (Low Temperature Long Time - Slow Pasteurization), already in the consumer packaging, at a temperature of 60 to 62°C, for a period of 8 to 12 minutes, or in HTST-type pasteurization (High Temperature Short Time - Rapid Pasteurization), before packaging in equipment provided with tubes and heat exchangers, at a temperature of 72 to 82°C, for a period of 20 to 30 seconds, being ready for consumption.

It should be noted, once again, that a major distinguishing feature of the present invention, in addition to providing a new beverage, lies in the step of neutralization of the tannins present in the acai seed, which occurs by means of fermentation of the seeds in windrows, for a period of 48 to 96 hours, or by ethylene inactivation by soaking the seeds in a hydroalcoholic solution (1 liter of 96 GL alcohol to 100 liters of water), for a period of 120 to 196 hours.

**Table 3: Result of analysis of the powder of acai seed.**

| Determination/Parameter | Methodology | Result |
|---|---|---|
| Total Crude Fiber (%) | Gravimetry | 75.80 |
| Protein (%) | Kjeldahl Distillation | 7.60 |
| Vitamin C (%) | HPLC | <0.01 |
| Total polyphenols (% of Gallic Acid) | Spectrophotometry | 5.02 |
| Tannins (g/100g) | Titration | 0.12 |
| | | |

| Fat-soluble Vitamins | | |
|---|---|---|
| Vitamin A (Retinol) (µg/100g) | HPLC | <50 |
| Vitamin D (Calciferol) (µg/100g) | HPLC | <50 |
| Vitamin D2 (Ergocalciferol) (µg/100g) | HPLC | <50 |
| Vitamin D3 (Cholecalciferol) (µg/100g) | HPLC | 1.3 |
| Vitamin E (alpha-tocopherol) (mg/100g) | HPLC | <0.25 |
| Vitamin K (Phytomenadione) (µg/100g) | HPLC | <1 |

The ready-to-drink beverage-type food composition based on acai seed, whose analysis is shown in Table 4, obtained as previously described, is characterized by comprising:
✔ Acai seed powder, in a proportion of 0.5 to 6% w/w of the total volume of the composition;
✔ Sweetening agent, in a proportion of 0.02 to 6% w/w of the total volume of the composition;
✔ Syrup or natural extract, in a proportion of 0.4 to 0.8% w/w of the total volume of the composition;
✔ Water, q.s. to 100%.

The sweetening agent employed for obtaining the ready-to-drink beverage-type composition is characterized by being selected from: sucralose, cane sugar, stevia, xylitol, erythritol, monk fruit and agave syrup, in a proportion of 0.02 to 6% w/w of the volume of the composition.

The natural syrups employed for obtaining the ready-to-drink beverage-type composition are commercially obtained, and different flavors may be used, among them guarana, passion fruit, strawberry, mango, pineapple, lemon, red fruits, in addition to natural extract such as CBD or THC, in a proportion of 0.4 to 0.8% w/w of the volume of the composition. It is important to note that commercially available syrups generally present, in their composition: water, sugar, concentrated juice, flavorings and preservatives, the syrups of the commercial brand Kaly^{®} being used in the present invention. Alternatively to syrups, natural extracts, mixtures of fruit juices, guarana powder and cocoa may also be used.

The ready-to-drink beverage-type composition may further be provided in alcoholic versions. For this purpose, in these versions, alcoholic beverages Gin or Vodka are added to the process, in a proportion of 5 to 15% w/w of the volume of the composition, together with the sweetening agent, therefore, after the clarification step and before the pasteurization step. Thus, the alcoholic versions of the product comprise:
✔ Acai seed powder, in a proportion of 0.5 to 6% w/w of the total volume of the composition;
✔ Sweetening agent, in a proportion of 0.02 to 6% w/w of the total volume of the composition;
✔ Syrup or natural extract, in a proportion of 0.4 to 0.8% w/w of the total volume of the composition;
✔ Gin or Vodka, in a proportion of 5 to 15% w/w of the volume of the composition;
✔ Water, q.s. to 100%.

**Table 4: Results of the analysis of the ready-to-drink beverage-type food composition based on acai seeds.**

| Determination/Parameter | Method | Result |
|---|---|---|
| Total Sugars | lodometry | 0.07 |
| Total Carotenoids | Spectrophotometry | 1.13 |
| Total Polyphenols | Spectrophotometry | 0.03 |
| Insoluble dietary fibers | Gravimetry | <0.1 |
| | | |

| Mineral Composition | | |
|---|---|---|
| Ca (%) | ICP | 4.23 |
| Na (%) | ICP | 9.75 |
| K (%) | ICP | 41.92 |
| Mg (%) | ICP | 2.15 |
| B (ppm) | ICP | <0.1 |
| P (ppm) | ICP | 9.23 |
| Fe (ppm) | ICP | 1.07 |
| Zn (ppm) | ICP | <0.1 |
| Mn (ppm) | ICP | <0.1 |
| Cu (ppm) | ICP | <0.1 |
| | | |

| Nutritional Composition | | |
|---|---|---|
| Humidity (g/100g) | Gravimetry | 99.6 |
| Fats (g/100g) | Soxhlet | 0.12 |
| Proteins (g/100g) | Kjeldahl Distillation | 0.1 |
| Ashes (g/100g) | Gravimetry | 0.02 |
| Carbohydrates (g/100g) | Calculation | 0.16 |
| Energy (kJ/100g) | Calculation | 8.95 |
| Energy (kcal/100g) | Calculation | 2.14 |
| | | |

| Total vitamins (water- and fat-soluble) | | |
|---|---|---|
| Vitamin A (Beta-carotene) (µg/100 g) | HPLC | <50 |
| Vitamin D (Calciferol) (µg/100 g) | HPLC | <50 |
| Vitamin D2 (Ergocalciferol) (µg/100 g) | HPLC | <50 |
| Vitamin D3 (Cholecalciferol) (µg/100 g) | HPLC | <1 |
| Vitamin E (Alpha-tocopherol) (mg/100 g) | HPLC | <0.25 |
| Vitamin K (Phytomenadione) (µg/100 g) | HPLC | <1 |
| Vitamin B1 (Thiamine) (mg/100 g) | HPLC | 0.03 |
| Vitamin B2 (Riboflavin) (mg/100 g) | HPLC | <0.005 |
| Vitamin B3 (Niacin) (mg/100 g) | HPLC | <0.05 |
| Vitamin B5 (Pantothenic acid) (mg/100 g) | HPLC | <0.013 |
| Vitamin B6 (Pyridoxine) (mg/100 g) | HPLC | <0.013 |
| Vitamin B8 or H (Biotin) (µg/100 g) | HPLC | <2.5 |
| Vitamin B9 (Folic acid) (µg/100 g) | HPLC | <25 |
| Vitamin B12 (Cobalamin) (µg/100 g) | HPLC | <2 |
| Vitamin C (Ascorbic acid) (mg/100 g) | HPLC | - |

Based on the foregoing, the contribution of the present invention to the state of the art is notable, as it provides an innovative process for obtaining a healthy and novel beverage from the transformation of a raw material considered by many to be waste, given that a ready-to-drink beverage-type food composition is provided, obtained by infusing the powder obtained from the acai seeds in water, and adding syrups or natural extracts and sweetening agents, as well as its production process, which allows for the reduction of the beverage's astringency without the use of chemical components or excessively high temperatures, which compromise the nutrients present in the beverage.

## Claims

1. **PROCESS FOR OBTAINING A READY-TO-DRINK BEVERAGE-TYPE FOOD COMPOSITION BASED ON ACAI SEED characterized by** the acai seeds being collected immediately after pulp extraction and washed in running water; thereafter, carrying out the step of neutralization of the tannins present in the seed, for which purpose the seeds may be subjected to windrow fermentation for a period of 48 to 96 hours, or subjected to soaking in a hydroalcoholic solution (1 liter of 96 GL alcohol to 100 liters of water) for a period of 120 to 196 hours; after neutralization, the seeds are dried in open air and under sunlight for five days; after this period, the seeds are defibrillated and, subsequently, subjected to roasting for a period of 18 to 48 minutes at temperatures of 150 to 320°C; after roasting, grinding is carried out, obtaining a powder with medium granulometry; after obtaining the acai seed powder, an infusion in water at 90°C is prepared, in a proportion sufficient to 100% w/w of the total volume of the composition, with a concentration of 0.5 to 6% w/w, and, thereafter, syrup or natural extract is added thereto, in a proportion of 0.4 to 0.8% w/w of the total volume of the composition; thereafter, mechanical homogenization of the mixture is carried out, followed by filtration in three stages, the first being 5.0 microns, the second 1.0 micron and the third 0.45 micron; and clarification, by adsorption, using clarifying agents such as silica gel, tannic acids or PVPP (polyvinylpolypyrrolidone), for a period of 24 to 96 hours; after clarification, the sweetening agent, in a proportion of 0.02 to 6% w/w of the total volume of the composition, is added to the mixture, alternatively, at this moment alcoholic beverages may be added, and it is again homogenized, before being pasteurized, in LTLT-type pasteurization, already in the consumer packaging, at a temperature of 60 to 62°C, for a period of 8 to 12 minutes, or in HTST-type pasteurization, before packaging, at a temperature of 72 to 82°C, for a period of 20 to 30 seconds, being ready for consumption.

2. **PROCESS FOR OBTAINING A READY-TO-DRINK BEVERAGE-TYPE FOOD COMPOSITION BASED ON ACAI SEED,** according to claim 1, **characterized by** the step of neutralization of the tannins present in the acai seed occurs by means of fermentation of the seeds in windrows for a period of 48 to 96 hours, or by ethylene inactivation by soaking the seeds in a hydroalcoholic solution (1 liter of 96 GL alcohol to 100 liters of water) for a period of 120 to 196 hours.

3. **PROCESS FOR OBTAINING A READY-TO-DRINK BEVERAGE-TYPE FOOD COMPOSITION BASED ON ACAI SEED,** according to claim 1, **characterized by the possibility of obtaining** the beverage in alcoholic versions, for which alcoholic beverages Gin or Vodka, in a proportion of 5 to 15% w/w of the volume of the composition, are added to the obtaining process, together with the sweetening agent, after the clarification step.

4. **READY-TO-DRINK BEVERAGE-TYPE FOOD COMPOSITION BASED ON ACAI SEED,** obtained as described in claim 1, **characterized by** consisting of:
✔ Acai seed powder, in a proportion of 0.5 to 6% w/w of the total volume of the composition;
✔ Sweetening agent, in a proportion of 0.02 to 6% w/w of the total volume of the composition;
✔ Syrup or natural extract, in a proportion of 0.4 to 0.8% w/w of the total volume of the composition;
✔ Water, q.s. to 100%.

5. **READY-TO-DRINK BEVERAGE-TYPE FOOD COMPOSITION BASED ON ACAI SEED,** according to claim 4, **characterized by** the sweetening agent being selected from: sucralose, cane sugar, stevia, xylitol, erythritol, monk fruit and agave syrup.

6. **READY-TO-DRINK BEVERAGE-TYPE FOOD COMPOSITION BASED ON ACAI SEED,** according to claim 4, **characterized by** the syrups being selected from: guarana, passion fruit, strawberry, mango, pineapple, lemon, red berries; in addition to natural extract such as CBD or THC; mixtures of fruit juices, guarana powder and cocoa.

7. **READY-TO-DRINK BEVERAGE-TYPE FOOD COMPOSITION BASED ON ACAI SEED,** according to claim 4, **characterized by** the alcoholic versions comprising alcoholic beverages Gin or Vodka, in a proportion of 5 to 15% w/w of the volume of the composition.

8. **READY-TO-DRINK BEVERAGE-TYPE FOOD COMPOSITION BASED ON ACAI SEED,** according to claim 7, **characterized by** the alcoholic versions consisting of:
✔ Acai seed powder, in a proportion of 0.5 to 6% w/w of the total volume of the composition;
✔ Sweetening agent, in a proportion of 0.02 to 6% w/w of the total volume of the composition;
✔ Syrup or natural extract, in a proportion of 0.4 to 0.8% w/w of the total volume of the composition;
✔ Gin or Vodka, in a proportion of 5 to 15% w/w of the volume of the composition;
✔ Water, q.s. to 100%.
